# EUROPEAN PATENT SPECIFICATION

(11) **EP 1 750 512 B1**
(45) Date of publication and mention of the grant of the patent: **27.02.2008**
(21) Application number: 05740254.7
(22) Date of filing: 15.04.2005
(51) Int. Cl.: A01N 47/02, A01N 25/00

(54) **METHOD OF COMBATING FRUIT FLIES**
VERFAHREN ZUR BEKÄMPFUNG VON FRUCHTFLIEGEN
PROCEDE DE LUTTE CONTRE LES MOUCHES A FRUITS

(30) Priority: 23.04.2004 US 564596 P; 26.04.2004 US 564964 P
(43) Date of publication of application: 14.02.2007
(73) Proprietor: BASF Aktiengesellschaft, 67056 Ludwigshafen (DE)
(72) Inventor: HOLMES, Keith, A., Cary, NC 27519 (US); BULL, Richard, McLean, Brisbane Q4068 (AU)
(86) International application number: PCT/EP2005/004005
(87) International publication number: WO 2005/102054

(56) References cited:
- WO-A-00/28824
- WO-A-97/11602
- DATABASE BIOSIS [Online] BIOSCIENCES INFORMATION SERVICE, PHILADELPHIA, PA, US; December 2003 (2003-12), VARGAS ROGER I ET AL: "Field trials of spinosad as a replacement for naled, DDVP, and malathion in methyl eugenol and cue-lure bucket traps to attract and kill male oriental fruit flies and melon flies (Diptera: Tephritidae) in Hawaii." XP002338683 Database accession no. PREV200400115011 & JOURNAL OF ECONOMIC ENTOMOLOGY, vol. 96, no. 6, December 2003 (2003-12), pages 1780-1785, ISSN: 0022-0493
- DATABASE BIOSIS [Online] BIOSCIENCES INFORMATION SERVICE, PHILADELPHIA, PA, US; July 2001 (2001-07), ALYOKHIN ANDREI V ET AL: "Abundance and mating behavior of oriental fruit flies (Diptera: Tephritidae) near methyleugenol-baited traps" XP002338684 Database accession no. PREV200100386438 & PAN-PACIFIC ENTOMOLOGIST, vol. 77, no. 3, July 2001 (2001-07), pages 161-167, ISSN: 0031-0603
- G. BUCZKOWSKI & C. SCHAL: "Method of insecticide delivery affects horizontal transfer of fipronil in the german cockroach (Dictyoptera: Blattellidae)" JOUNAL OF ECONOMIC ENTOMOLOGY, vol. 94, no. 3, 2001, pages 680-685, XP002338647
- G. BUCZKOWSKI & C. SCHAL: "Emetophagy: Fipronil-induced regurgitation of bait and its dissemination from german cockroach adults to nymphs" PESTICIDE BIOCHEMISTRY AND PHYSIOLOGY, vol. 71, 2001, pages 147-155, XP002338648

## Description

The present invention pertains to a method of combating fruit flies by bringing into contact the male and the female species with fipronil characterized in that
a) the male species are lured onto a material containing a pheromone or a parapheromone and fipronil
b) the male species take up fipronil via contact with this material and
c) transfer fipronil to the females via contact.

The present invention also pertains to a method of combating fruit flies by bringing into contact the female species with fipronil according to the above-defined method.

The present invention further provides a method of substantially eradicating from a land area fruit flies comprising the above method.

Fruit flies are one of the most damaging insect pests in agriculture. They are found in virtually every country and affect over 250 cultivated fruit and vegetable crops. Actual methods of combating fruit flies are not satisfying however. It was therefore an object of the present invention to provide a further, improved method of combating fruit flies.

The larvae or maggots of the fruit flies are the damaging stage. Females are capable of laying hundreds of eggs during their lifetime. The eggs are deposited just under the skin of ripening fruits and the maggots feed on the pulp, rendering it inedible or unsaleable. The maggots eventually drop to the ground, pupate and emerge as adults in 2 - 3 weeks, thus continuing the cycle. It is therefore highly desirable to have an efficient method of combating female fruit flies at one's hand in order to achieve efficient fruit fly control. It was therefore a further object of the present invention to provide an improved method of combating female fruit flies.

Control of fruit flies in commercial crops depends on either killing the hatching eggs and larvae in the fruit or stopping the female from mating or laying eggs. This can be accomplished three ways, either with broadcast foliar sprays or with bait applications using different attractants in combination with insecticides or even with sterile male release (where massive numbers of sterile males are dropped into the area to mate with wild females thus slowing the reproduction of the insects).

A disadvantage of widespread aerial spraying of a pesticidal composition (commonly used pesticides are organo-phosphate compounds like malathion) it that it generally effects both the agricultural areas and areas inhabited by people thus also treating non-target species of mammals and arthropods as well as generating adverse environmental effects.

Food lures can be used to attract fruit flies in a bait. Females need a protein meal before they lay eggs and different proteins and protein breakdown products (ammonia, putrescine) are attractive to them during this time.

The most common used food lures contain proteinaceous compounds (that is, protein itself and breakdown products of protein such as ammonia or putrescine). Examples for such proteins are yeast protein autolysate (e.g. in Amulet^{™} gel spot spray) or protein hydrolysate (Nulure, Dow GF120 = Naturalite). Using the attractant with the insecticides gives better control at a lower use rate with less impact on non-target organisms. The disadvantages of these proteinaceous lures are their limited shelf life if they are of organic origin and that they can be difficult to formulate.

The addition of a pesticide to fruit fly specific pheromone or parapheromone is the basis for control by the Male Annihilation Technique (MAT). MAT relies on male fruit flies being strongly attracted to pheromones or pheromone-like chemicals. Sex and aggregation pheromones are used by a number of different species to locate possible mates. These can be either single components or mixtures of two or more different chemicals that act in concert. These pheromones, or analogues thereof, can be used in combination with an insecticide treated matrix to eliminate the males in an area.

The vast majority of fruit fly pheromones attract males (although the olive fly does produce a female attractive compound). There are currently four different synthetic parapheromones commercially available that attract various species of *Bactrocera, Dacus* and *Ceratitis*: Trimedlure (t-butyl-4-(or5)-chloro-2-methyl cyclohexane carboxylate), Cue-lure (4-*(p*-acetoxyphonyl)-2-butanone) Willison's lure (4-(*p*-hydroxyphenyl)-2-butanone) and methyl eugenol.

These synthetic pheromones are generally expensive and must be manipulated to give a controlled release over a long time.

A number of different attractants (food and pheromone) are given in table 1. For efficient control, the attractant needs to be selected specific for a species, as described e.g. for Australian pests in "The responses of fruit fly species (Diptera:Tephritidae) in Australia to various attractants.", R.A.I. Drew and G.H.S. Hooper, 1981. J.Aust. ent. Soc., 20:201-205 or "The responses of fruit fly species (Diptera:Tephritidae) in the South Pacific area to male attractants.", R.A.I. Drew, 1974. J. Aust. Ent. Soc., 13:267-270.

**Table 1**

| **Species** | **Common name** | **Attractant** |
|---|---|---|
| *Ceratitis capitita* | Mediterranean fruit fly | Male pheromone (Trimedlure), ammonia, protein |
| *C. rosa* | Natal fruit fly | Male pheromone (Trimedlure), ammonia, protein |
| *Bactrocera olea* | Olive fly | Ammonia, female pheromone, protein |
| *Bactrocera tryoni* | Queensland fruit fly | Cue-lure, protein |
| *Bactrocera dorsalis* | Oriental fruit fly | Methyl eugenol, protein |
| *B. cucurbitae* | Melon fruit fly | Cue-lure, protein |
| *Anastrepha ludens* | Mexican fruit fly | Male pheromone, ammonia |
| A. *suspensa* | Caribbean fruit fly | Male pheromone, ammonia |
| *Rhagoletis cerisa* | Cherry fruit fly | Ammonia, butyl hexanoate |
| *R. pomonella* | Apple maggot fly | Ammonia, butyl hexanoate |

The present invention is especially useful for combating fruit flies of the family Tephritidae, including the genera *Anastrepha, Ceratitis, Rhagoletis, Toxotrypana, Bactrocera,* and *Dacus,* for which attracting pheromones or parapheromones are known or are being developed. Examples are *Anastrepha ludens* (Mexican fruit fly), *Anastrepha fraterculus* (South American fruit fly), *Anastrepha obliqua* (West Indian fruit fly), *Anastrepha serpentina* (Sapodilla fruit fly), *Anastrepha striata* (Guava fly), *Anastrepha suspensa* (Caribbean fruit fly), *Ceratitis capitata* (Medfly), *Ceratitis cosyra* (Mango fruit fly), *Ceratitis rosa* (Natal fruit fly), *Rhagoletis cerasi* (Cherry fruit fly), *Rhagoletis pomonella* (Apple maggot), *Toxotrypana curvicauda* (Papaya fruit fly), *Bactrocera carambolae* (Carambola fruit fly), *Bactrocera cucumis* (Cucumber fruit fly), *Bactrocera cucurbitae* (Melon fly), *Bactrocera dorsalis* (Oriental fruit fly), *Bactrocera latifrons* (Solanum fruit fly), *Bactrocera musae* (Banana fly*), Bactrocera oleae* (Olive fly), *Bactrocera papayae* (Asian papaya fruit fly), *Bactrocera philippinensis* (Philippine fruit fly), *Bactrocera tryoni* (Queensland fruit fly), *Bactrocera zonata* (Peach fruit fly), *Bactrocera minax* (Chinese citrus fruit fly), *Dacus ciliatus* (Ethiopian fruit fly), and *Dacus frontalis*.

The inventive method is especially useful for combating fruit flies where the parapheromone is Cue-lure (4-*(p*-acetoxyphonyl)-2-butanone), or methyl eugenol for luring males of the order *Bactrocera* and Trimedlure (t-butyl-4-(or5)-chloro-2-methyl cyclohexane carboxylate) for attracting males of the order *Ceratitus.*

MAT-based control programmes have traditionally used fibre blocks or cotton wads etc impregnated with Cue-lure or methyl eugenol (depending on the target species) plus a toxicant to kill the male flies when they are attracted and contact the bait. These 'attract-and-kill' devices generally incorporate high concentrations of e.g. malathion as the toxicant and cause rapid death of male flies that contact them. Accordingly, the success of such control operations has depended on female flies being killed by applying weekly baits such as liquid protein bait sprays.

Surprisingly, it has now been found that according to the method of the present invention both the males and the females are combated via a pheromone-based bait that only attracts the males. No other MAT has ever demonstrated this action, killing only males.

A suitable material containing a pheromone or a parapheromone and fipronil for use in the inventive method is a bait paper mâché block impregnated with synthetic pheromones and fipronil (e.g. AMULET^{™} bait stations employing cue-lure or methyl eugenol as pheromones) that gives controlled release over a long time.

Advantageously, fipronil is contained in amounts of low concentrations of 15 - 40 mg per bait station. A preferred amount according to the present invention is 20 mg per bait station.

AMULET^{™} parapheromone stations use fipronil at a very low concentration (20 mg per station) that has no repulsion to male flies landing on the device allowing them to freely imbibe from its surface and walk over it for long periods. Female fruit flies of the same species are not attracted by the pheromone and do no show any interest in the stations. Fipronil (especially at low concentrations) is slow acting on insects, and male fruit flies do not die for 3-48 hours after contact, depending on length of contact.

After contacting Cue-lure on an Amulet^{™} station, the sex drive of male fruit flies does not appear to be affected and they are still keen to mount female flies attempting or possibly mating with them. Through this contact they contaminate the integument of the female that subsequently dies the following day. Analyses of female fruit flies killed by this contact have found significant residues of fipronil on their integument confirming the cause of death.

The fact that both the males and the females can be combated via a (para)pheromone-based bait that only attracts the males makes it possible to base fruit fly control on the pheromone bait alone.

The method of combating male and female fruit flies via a (para)pheromone based bait according to the present invention can also be combined with other methods of combating fruit flies such as via food baits, preferably protein baits such as protein gel spot sprays containing yeast protein autolysate, e.g. the AMULET^{™} gel spot spray.

The inventive method of combating fruit flies by bringing into contact the female species with fipronil via male-female transfer can be used in crop protection as well as in eradication programs.

In eradication control, generally a combination of different controls is used - and necessary - to completely eliminate the infestation combined with strict quarantine regulations to completely rid a land area of the pest species. The Male Annihilation Technique has been used successfully in a number of major eradication campaigns using relatively high doses of malathion or naled insecticides as the functional toxicant, with the corresponding disadvantages as described above.

Due to male-female transfer of fipronil, the speed of population reduction is enhanced significantly. This represents a major advantage for eradication programs which generally last years until complete eradication is achieved.

For crop protection and area-wide control, suitable rates of bait stations are from 3 - 25 / ha, preferably from 8 -16 / ha.

For large scale eradication programmes, a lower rate of 4 - 16 per hectare is used.

### Example:

In a large field cage (4 x 4 x 2.5 m) trial, a single block of paper mâché containing 20 milligrams of fipronil plus Cue-lure was used per cage.

After 2 days of exposure, over 90% mortality of male and female *Bactrocera tryoni* was achieved, after 3 days even over 95% mortality of males and females.

Dead females were collected from the floor of the cage and dissected. No residues of fipronil were found in their crops but only on their integument, proving the male-to-female transfer.

## Claims

1. A method of combating fruit flies by bringing into contact the male and the female species with fipronil **characterized in that**
a) the male species are lured onto a material containing a pheromone or a parapheromone and fipronil
b) the male species take up fipronil via contact with this material and
c) transfer fipronil to the females via contact.

2. A method of combating fruit flies by bringing into contact the female species with fipronil according to the method defined in claim 1.

3. A method according to claims 1 or 2 wherein the fruit flies are selected from the genera *Bactrocera, Dacus,* and *Ceratitis.*

4. A method according to claims 1 to 3 wherein the male species are lured onto the fipronil-containing material by a parapheromone.

5. A method according to claim 4 wherein the parapheromone is Cue-lure (4-*(p-*acetoxyphonyl)-2-butanone), or methyl eugenol for luring males of the genus *Bactrocera* and Trimedlure (t-butyl-4-(or5)-chloro-2-methyl cyclohexane carboxylate) for attracting males of the genus *Ceratitus*.

6. A method according to claims 1 to 5 wherein the material containing a pheromone or a parapheromone and fipronil is a block of paper-mâché.

7. A method according to claim 6 wherein fipronil is contained in amounts of 15 - 40 mg per block.

8. A method of combating fruit flies comprising combining a method as defined in claims 1 to 7 with a method of combating the female and the male species with a protein bait containing fipronil.

9. A method according to claim 8 wherein the protein bait is in the form of a gel protein spray.

10. A method of substantially eradicating from a land area fruit flies comprising any one of the methods defined in claims 1 to 9.

## Patentansprüche

1. Verfahren zur Bekämpfung von Fruchtfliegen dadurch, daß man Männchen und Weibchen mit Fipronil in Kontakt bringt, **dadurch gekennzeichnet, daß**
a) die Männchen auf eine Substanz, die ein Pheromon oder ein Parapheromon und Fipronil enthält, gelockt werden,
b) die Männchen Fipronil über Kontakt mit dieser Substanz aufnehmen und
c) Fipronil auf die Weibchen durch Kontakt übertragen.

2. Verfahren zur Bekämpfung von Fruchtfliegen dadurch, daß man die Weibchen nach dem in Anspruch 1 definierten Verfahren mit Fipronil in Kontakt bringt.

3. Verfahren nach Anspruch 1 oder 2, wobei die Fruchtfliegen aus der Gattung *Bactrocera, Dacus* und *Ceratitis* stammen.

4. Verfahren nach den Ansprüchen 1 bis 3, wobei die Männchen durch ein Parapheromon auf die fipronilhaltige Substanz gelockt werden.

5. Verfahren nach Anspruch 4, wobei es sich bei dem Parapheromon um Cue-lure (4-(p-Acetoxyphenyl)-2-butanon) oder Methyleugenol für die Anlockung von Männchen der Gattung *Bactrocera* und um Trimedlure (t-butyl-4-(oder -5-)chlor-2-methylcyclohexancarboxylat) für die Anlockung von Männchen der Gattung *Ceratitis* handelt.

6. Verfahren nach den Ansprüchen 1 bis 5, wobei es sich bei der Substanz, die ein Pheromon oder ein Parapheromon und Fipronil enthält, um einen Papiermaché-Block handelt.

7. Verfahren nach Anspruch 6, wobei Fipronil in Mengen von 15-40 mg pro Block enthalten ist.

8. Verfahren zur Bekämpfung von Fruchtfliegen, bei dem man ein Verfahren gemäß den Ansprüchen 1 bis 7 mit einem Verfahren zur Bekämpfung der Weibchen und der Männchen mit einem fipronilhaltigen Proteinköder kombiniert.

9. Verfahren nach Anspruch 8, wobei der Proteinköder in Form eines Gelproteinsprays vorliegt.

10. Verfahren zur prinzipiellen Ausmerzung von Fruchtfliegen von einem Gebiet, umfassend ein beliebiges der in den Ansprüchen 1 bis 9 definierten Verfahren.

## Revendications

1. Procédé pour lutter contre les mouches à fruits en mettant en contact le mâle et la femelle avec du fipronile, **caractérisé en ce que** :
a. le mâle est attiré sur une matière contenant une phéromone ou une paraphéromone et du fipronile,
b. le mâle absorbe le fipronile par contact avec cette matière et
c. transfère le fipronile sur la femelle par contact.

2. Procédé pour lutter contre les mouches à fruits en mettant en contact la femelle avec le fipronile selon le procédé défini dans la revendication 1.

3. Procédé selon l'une des revendications 1 ou 2, dans lequel les mouches à fruits sont choisies à partir des espèces *Bactrocera, Dacus* et *Ceratitis.*

4. Procédé selon l'une des revendications 1 à 3, dans lequel le mâle est attiré sur la matière contenant du fipronile par une paraphéromone.

5. Procédé selon la revendication 4, dans lequel la paraphéromone est du Cue-lure (4-(*p*-acétoxyphony)-2-butanone) ou du méthyleugénol pour attirer les mâles de l'espèce *Bactrocera* et du Trimedlure (t-butyl-4-(ou 5)-chloro-2-méthylcyclohexanecarboxylate) pour attirer les mâles de l'espèce *Ceratitis*.

6. Procédé selon l'une des revendications 1 à 5, dans lequel la matière contenant une phéromone ou une paraphéromone et le fipronile est un bloc de papier mâché.

7. Procédé selon la revendication 6 dans lequel le fipronile est contenu dans des quantités de 15 - 40 mg par bloc.

8. Procédé pour lutter contre les mouches à fruits consistant à combiner un procédé selon l'une des revendications 1 à 7 avec un procédé luttant contre la femelle et le mâle avec un appât protéiné contenant du fipronile.

9. Procédé selon la revendication 8, dans lequel l'appât protéiné se présente sous la forme d'un spray de protéines en gel.

10. Procédé consistant à éradiquer en substance d'une zone agricole les mouches à fruits comprenant l'un des procédés définis dans l'une des revendications 1 à 9.
